# FASCICULE DE BREVET EUROPEEN

(11) **EP 3 009 784 B1**
(45) Date de publication et mention de la délivrance du brevet: **10.01.2018**
(21) Numéro de dépôt: 15183272.2
(22) Date de dépôt: 01.09.2015
(51) Int. Cl.: F28F 19/00, B60H 1/00, F28D 1/053, F28F 1/12

(54) **ECHANGEUR THERMIQUE À DÉGIVRAGE AMÉLIORÉ**
WÄRMETAUSCHER MIT VERBESSERTER ENTEISUNG
HEAT EXCHANGER WITH IMPROVED DEICING

(30) Priorité: 04.09.2014 FR 1458283
(43) Date de publication de la demande: 20.04.2016
(73) Titulaire: VALEO SYSTEMES THERMIQUES, 78320 Le Mesnil Saint-Denis (FR)
(72) Inventeur: BENOUALI, Jugurtha, 92800 PUTEAUX (FR)
(74) Mandataire: Metz, Gaëlle

(56) Documents cités:
- EP-A1- 1 485 661
- WO-A1-2013/084464
- JP-A- S61 153 495
- US-B1- 6 354 367

## Description

La présente invention concerne les échangeurs thermiques.

L'invention concerne en particulier un échangeur thermique selon le préambule de la revendication 1 et un procédé de fabrication d'un tel échangeur thermique selon la revendication 11. WO2013084464 divulgue un tel échangeur thermique. Elle concerne notamment, mais non exclusivement, les échangeurs thermiques compris dans un dispositif de climatisation qui peut lui-même être compris dans un véhicule automobile.

Les dispositifs de climatisation comportent généralement au moins deux échangeurs thermiques, un compresseur et un détendeur. Un premier échangeur thermique est placé au contact de l'air extérieur et un second échangeur thermique est placé dans le flux d'air destiné à déboucher et à circuler dans un volume tel que l'habitacle d'un véhicule automobile. Le dispositif de climatisation peut notamment fonctionner dans un mode de climatisation où au moins une partie de l'énergie calorifique dudit flux d'air est absorbée par le second échangeur thermique avant que ce flux d'air ainsi refroidi ne pénètre dans l'habitacle. Cette énergie calorifique est ensuite relâchée par le premier échangeur thermique dans l'air extérieur. Le dispositif de climatisation peut également être réversible et fonctionner dans un mode de pompe à chaleur où de l'énergie calorifique est absorbée par le premier échangeur thermique dans l'air extérieur. Cette énergie calorifique est ensuite relâchée dans le flux d'air destiné à pénétrer dans l'habitacle par un troisième échangeur thermique, afin de le réchauffer.

Par temps froid, et plus particulièrement lorsque le dispositif de climatisation fonctionne en mode pompe à chaleur, du givre peut se former sur le premier échangeur thermique en raison de la condensation d'une partie de l'humidité de l'air au voisinage de ce premier échangeur thermique. Ce givre entrave voire empêche la circulation du flux d'air traversant le premier échangeur thermique, ce qui réduit son efficacité et empêche son bon fonctionnement.

Afin de remédier à ce problème d'apparition indésirable de givre, il est connu de faire subir périodiquement ou selon les besoins, un dégivrage au premier échangeur thermique par inversion des flux de fluide réfrigérant circulant au sein du dispositif de climatisation, et ce afin d'amener le fluide réfrigérant chaud au niveau de ce dernier.

Néanmoins, le déclenchement de ce processus de dégivrage entraîne un arrêt du fonctionnement du dispositif de climatisation, en mode pompe à chaleur, ce qui peut nuire au confort des passagers dans l'habitacle.

Ainsi, un des objectifs de l'invention est de remédier au moins partiellement aux inconvénients de l'art antérieur et de proposer un échangeur thermique dont la fréquence de dégivrage est la plus faible possible.

A cet effet, la présente invention a pour objet un échangeur thermique comportant :
- au moins deux ailettes ;
- au moins deux moyens permettant de guider l'écoulement d'un fluide qui sont disposés l'un par rapport à l'autre de telle manière que les ailettes peuvent être disposées totalement ou partiellement entre lesdits au moins deux moyens de guidage de l'écoulement d'un fluide, de façon à être aptes à permettre le guidage de l'écoulement d'un flux d'air circulant entre lesdits moyens de guidage de l'écoulement d'un fluide,
chaque moyen de guidage de l'écoulement d'un fluide comprend au moins un côté d'attaque, les côtés d'attaque définissant avec deux ailettes contigües l'entrée d'un canal de circulation dudit flux d'air,
caractérisé en ce que la distance séparant l'extrémité d'une ailette d'un côté d'attaque est distincte de la distance séparant l'extrémité d'une ailette contigüe du même côté d'attaque.

De cette façon, les extrémités sont décalées les unes par rapport aux autres, ce qui permet avantageusement d'accroître le temps nécessaire pour que le givre apparaisse, de rendre plus difficile le bouchage des espaces vides entre lesdites ailettes et donc de réduire la fréquence des opérations de dégivrage.

La distance qui sépare l'extrémité d'une ailette d'un côté d'attaque est définie comme étant la longueur la plus courte entre cette extrémité et le côté d'attaque.

Lesdites extrémités des ailettes sont définies comme étant les extrémités d'entrée qui se trouvent sensiblement en regard du flux d'air lorsque ce dernier pénètre ou s'apprête à pénétrer dans le canal de circulation, par opposition aux extrémités de sortie au niveau desquelles débouche ledit flux d'air.

Au moins un des côtés de l'un desdits moyens de guidage de l'écoulement d'un fluide délimite avec l'un au moins des côtés d'un autre desdits moyens de guidage de l'écoulement d'un fluide, un emplacement dans lequel sont disposées lesdites ailettes.

Selon une caractéristique, chaque moyen de guidage de l'écoulement d'un fluide de l'échangeur thermique comprend au moins un côté de sortie, les côtés de sortie définissant avec deux ailettes contigües la sortie d'un canal de circulation dudit flux d'air, et la distance séparant l'extrémité de sortie d'une ailette d'un côté de sortie est distincte de la distance séparant l'extrémité de sortie d'une ailette contigüe du même côté de sortie.

La distance qui sépare l'extrémité de sortie d'une ailette de sortie d'un côté de sortie est définie comme étant la longueur la plus courte entre cette extrémité de sortie et le côté de sortie.

Selon une caractéristique, l'échangeur thermique comporte en alternance :
- au moins une première ailette disposée partiellement entre au moins deux moyens de guidage de l'écoulement d'un fluide ;
- au moins une seconde ailette disposée totalement entre au moins deux moyens de guidage de l'écoulement d'un fluide.

De cette façon, une partie de la première ailette dépasse par rapport audit côté d'attaque et/ou de sortie alors que l'intégralité de la seconde ailette est disposée entre deux moyens de guidage de l'écoulement d'un fluide.

Selon une caractéristique, l'échangeur thermique comporte en alternance :
- au moins une première ailette disposée partiellement entre au moins deux moyens de guidage de l'écoulement d'un fluide, une partie de cette première ailette dépassant par rapport audit côté d'attaque et/ou audit côté de sortie ;
- au moins une troisième ailette disposée partiellement entre au moins deux moyens de guidage de l'écoulement d'un fluide, une partie de cette troisième ailette dépassant par rapport audit même côté d'attaque et/ou audit même côté de sortie ;
la longueur de ladite partie de la première ailette dépassant par rapport audit côté d'attaque est supérieure à celle de ladite partie de la troisième ailette dépassant par rapport audit même côté d'attaque et/ou la longueur de ladite partie de la première ailette dépassant par rapport audit côté de sortie est supérieure à celle de ladite partie de la troisième ailette dépassant par rapport audit même côté de sortie.

Selon une caractéristique, l'échangeur thermique comporte :
- au moins une première ailette disposée partiellement entre au moins deux moyens de guidage de l'écoulement d'un fluide, une partie de cette première ailette dépassant par rapport audit côté d'attaque et/ou audit côté de sortie ;
- au moins une seconde ailette disposée totalement entre au moins deux moyens de guidage de l'écoulement d'un fluide, l'intégralité de cette seconde ailette étant disposée entre ces deux moyens de guidage de l'écoulement d'un fluide ;
- au moins une troisième ailette disposée partiellement entre au moins deux moyens de guidage de l'écoulement d'un fluide, une partie de cette troisième ailette dépassant par rapport audit même côté d'attaque et/ou audit même côté de sortie ;
la longueur de ladite partie de la première ailette dépassant par rapport audit côté d'attaque est supérieure à celle de ladite partie de la troisième ailette dépassant par rapport audit même côté d'attaque et/ou la longueur de ladite partie de la première ailette dépassant par rapport audit côté de sortie est supérieure à celle de ladite partie de la troisième ailette dépassant par rapport audit même côté de sortie.

Ces différentes configurations de l'échangeur thermique permettent avantageusement que les extrémités d'entrée et/ou de sortie de deux ailettes contigües ne soient pas situées à la même distance respectivement du côté d'attaque et/ou du côté de sortie, ce qui permet avantageusement d'accroître le temps nécessaire pour que le givre apparaisse.

Selon une ou plusieurs caractéristiques de l'échangeur thermique selon l'invention, prise seule ou en combinaison :
- les moyens permettant de guider l'écoulement d'un fluide s'étendent sensiblement parallèlement les uns par rapport aux autres ;
- les axes longitudinaux des moyens permettant de guider l'écoulement d'un fluide s'étendent sensiblement parallèlement les uns par rapport aux autres ;
- lesdits côtés des deux moyens permettant de guider l'écoulement d'un fluide qui définissent un emplacement dans lequel sont disposées lesdites ailettes, s'étendent sensiblement parallèlement les uns par rapport aux autres ;
- les axes longitudinaux desdits côtés des deux moyens permettant de guider l'écoulement d'un fluide qui définissent un emplacement dans lequel sont disposées lesdites ailettes, s'étendent sensiblement parallèlement les uns par rapport aux autres ;
- les ailettes s'étendent sensiblement parallèlement les unes par rapport aux autres ;
- les axes longitudinaux des ailettes s'étendent sensiblement parallèlement les uns par rapport aux autres ;
- les moyens permettant de guider l'écoulement d'un fluide sont de forme sensiblement parallélépipédique ;
- les moyens permettant de guider l'écoulement d'un fluide présentent sensiblement la forme d'un parallélépipède rectangle ;
- les moyens permettant de guider l'écoulement d'un fluide sont de forme sensiblement parallélépipédique et comprennent chacun deux côtés opposés reliés par deux paires de côtés opposés, l'une de ces paires comprenant ledit côté d'attaque et ledit côté de sortie ;
- les moyens permettant de guider l'écoulement d'un fluide présentent sensiblement la forme d'un parallélépipède rectangle, chaque moyen permettant de guider l'écoulement d'un fluide comprend ainsi deux côtés longitudinaux opposés, deux côtés longitudinaux et latéraux opposés, et deux côtés transversaux opposés, chaque côté longitudinal est relié par ses deux arêtes longitudinales à un côté longitudinal et latéral respectif, et par ses deux arêtes transversales à un côté transversal respectif, les deux côtés longitudinaux et latéraux sont respectivement un côté d'attaque et un côté de sortie ;
- les ailettes sont de forme sensiblement parallélépipédique ;
- les ailettes présentent sensiblement la forme d'un parallélépipède rectangle ;
- les ailettes sont de forme sensiblement parallélépipédique, deux de ses côtés opposés l'un à l'autre étant ladite extrémité d'entrée et ladite extrémité de sortie ;
- les ailettes présentent sensiblement la forme d'un parallélépipède rectangle, chaque ailette comprend ainsi deux côtés longitudinaux opposés, deux côtés longitudinaux et latéraux opposés et deux côtés transversaux opposés, chaque côté longitudinal est relié par chacune de ses deux arêtes longitudinales à un côté longitudinal et latéral respectif, et par chacune de ses deux arêtes transversales à un côté transversal respectif, les deux côtés transversaux de chacune des ailettes sont les extrémités d'entrée et de sortie ;
- les ailettes présentent sensiblement la forme d'un parallélépipède rectangle, chaque ailette s'étend sensiblement perpendiculairement aux moyens permettant de guider l'écoulement d'un fluide de manière à ce que chacun de ses côtés longitudinaux et latéraux soit au contact avec l'un desdits côtés longitudinaux des moyens permettant de guider l'écoulement d'un fluide ;
- les moyens permettant de guider l'écoulement d'un fluide ont des formes et des dimensions sensiblement identiques ;
- les ailettes ont des formes et des dimensions sensiblement identiques ;
- les ailettes s'étendent sensiblement perpendiculairement aux moyens permettant de guider l'écoulement d'un fluide ;
- les axes longitudinaux des ailettes s'étendent sensiblement perpendiculairement aux axes longitudinaux des moyens permettant de guider l'écoulement d'un fluide ;
- chaque ailette s'étend longitudinalement, ses extrémités longitudinales étant ladite extrémité d'entrée et ladite extrémité de sortie ;
- la distance entre les extrémités de deux ailettes contigües est comprise entre 1 et 5 mm et de préférence de l'ordre de 2mm ;
- chaque moyen permettant de guider l'écoulement d'un fluide est configuré de manière à permettre audit fluide de circuler à l'intérieur de ce moyen de guidage, en permettant l'échange de calories avec l'air extérieur, le fluide pouvant ainsi céder ou emmagasiner des calories respectivement à ou en provenance de l'air extérieur ;
- ledit fluide circulant à l'intérieur d'un moyen permettant de guider l'écoulement d'un fluide est un fluide caloporteur ;
- les ailettes sont positionnées de telle façon que le sens de circulation du flux d'air circulant entre les moyens permettant de guider l'écoulement d'un fluide est sensiblement perpendiculaire au sens de circulation dudit fluide caloporteur.

Selon une autre caractéristique, les ailettes sont formées à partir d'une feuille métallique pliée comportant sur au moins un de ses bords une succession de motifs, ledit bord de la feuille métallique correspondant aux extrémités d'entrée et/ou de sortie des ailettes.

Selon une autre caractéristique, la hauteur de la partie des ailettes qui dépasse par rapport audit côté d'attaque et/ou de sortie est variable.

La présente invention concerne également un procédé de fabrication d'un échangeur thermique comportant :
- au moins deux ailettes ;
- au moins deux moyens permettant de guider l'écoulement d'un fluide qui sont disposés l'un par rapport à l'autre de telle manière que les ailettes peuvent être disposées totalement ou partiellement entre lesdits au moins deux moyens de guidage de l'écoulement d'un fluide, de façon à être aptes à permettre le guidage de l'écoulement d'un flux d'air circulant entre lesdits moyens de guidage de l'écoulement d'un fluide,
et chaque moyen de guidage de l'écoulement d'un fluide comprend au moins un côté d'attaque, les côtés d'attaque définissant avec deux ailettes contigües l'entrée d'un canal de circulation dudit flux d'air,
et dont la distance séparant l'extrémité d'une ailette d'un côté d'attaque est distincte de la distance séparant l'extrémité d'une ailette contigüe du même côté d'attaque,
ledit procédé comportant une étape de traitement d'une feuille métallique consistant à réaliser une succession de motifs dont les extrémités correspondent aux extrémités d'entrée et/ou de sortie des ailettes.

Selon un aspect du procédé selon l'invention, lesdits motifs sont réalisés lors d'une étape de prédécoupage de ladite feuille métallique réalisée avant une étape de pliage de ladite feuille métallique.

Selon un autre aspect du procédé selon l'invention, lesdits motifs sont réalisés lors d'une étape de pliage de ladite feuille métallique.

Selon un autre aspect du procédé selon l'invention, lesdits motifs sont des motifs crénelés.

Selon un autre aspect du procédé selon l'invention, lesdits motifs sont des motifs dentelés.

Selon un autre aspect du procédé selon l'invention, les dents du motif dentelé sont des triangles isocèles.

Selon un autre aspect du procédé selon l'invention, les dents du motif dentelé sont des triangles rectangles.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique, en perspective, d'une portion d'un échangeur thermique selon l'invention ;
- les figures 2A et 2B montrent des représentations schématiques, en vue de dessus, d'un échangeur thermique selon l'invention,
- la figure 3 montre une représentation schématique d'une feuille métallique pour la fabrication des ailettes d'un échangeur thermique selon l'invention,
- les figures 4A et 4B montrent des représentations schématiques de feuilles métalliques pour la fabrication des ailettes d'un échangeur thermique selon l'invention, selon d'autres modes de réalisation.

Sur les différentes figures, les éléments identiques portent les mêmes numéros de référence.

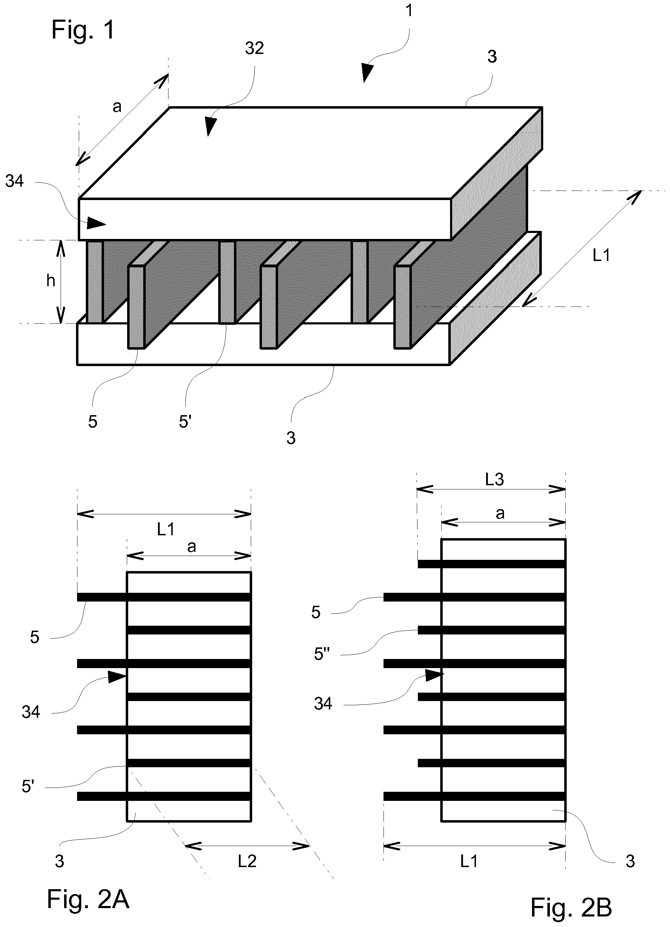

Tel que représenté sur la figure 1, un échangeur thermique 1 selon l'invention comporte deux moyens 3 permettant de guider l'écoulement d'un fluide qui présentent chacun sensiblement la forme d'un parallélépipède rectangle.

Ainsi, chaque moyen 3 de guidage de l'écoulement d'un fluide comprend deux côtés longitudinaux opposés 32 de largeur a, deux côtés longitudinaux et latéraux opposés, et deux côtés transversaux opposés. Chaque côté longitudinal 32 est relié par l'une de ses arêtes longitudinales à un côté longitudinal et latéral, et par l'une de ses arêtes transversales à un côté transversal.

En l'espèce, les côtés longitudinaux et latéraux comprennent un côté d'attaque 34 et un côté de sortie.

Les deux moyens 3 de guidage s'étendent sensiblement parallèlement les uns par rapport aux autres de telle façon que l'un des côtés 32 de l'un des moyens 3 de guidage soit sensiblement parallèle et en regard de l'un des côtés 32 de l'autre moyen 3 de guidage.

Un fluide caloporteur circule à l'intérieur des moyens de guidage 3 qui sont configurés afin de permettre l'échange de calories avec l'air extérieur qui circule notamment entre les moyens 3 de guidage, le fluide caloporteur pouvant ainsi céder ou emmagasiner des calories.

L'échangeur thermique 1 comporte également des ailettes 5, 5', 5" qui présentent chacune sensiblement la forme d'un parallélépipède rectangle.

Chaque ailette 5, 5', 5" comprend ainsi deux côtés longitudinaux opposés de largeur h, deux côtés longitudinaux et latéraux opposés et deux côtés transversaux opposés de longueur h. Chaque côté longitudinal est relié par chacune de ses deux arêtes longitudinales à un côté longitudinal et latéral, et par chacune de ses deux arêtes transversales à un côté transversal.

Les ailettes 5, 5', 5" sont disposées entre les moyens 3 de guidage, dans l'emplacement délimité par lesdits côtés 32 en regard l'un de l'autre.

Chaque ailette 5, 5', 5" s'étend sensiblement perpendiculairement aux moyens 3 de guidage de manière à ce que chacun de ses côtés longitudinaux et latéraux soit au contact avec l'un des côtés longitudinaux 32 des moyens de guidage.

Les deux côtés transversaux de chacune des ailettes 5, 5', 5" sont les extrémités d'entrée et de sortie. L'extrémité d'entrée se trouve sensiblement en regard du flux d'air lorsque ce dernier pénètre ou s'apprête à pénétrer entre deux moyens 3 de guidage.

Les côtés d'attaque 34 définissent avec deux ailettes 5, 5', 5" contigües l'entrée d'un canal de circulation dudit flux d'air lorsque ce dernier circule entre les deux moyens 3 de guidage.

Les ailettes 5, 5', 5" permettent ainsi de guider le flux d'air traversant l'échangeur thermique 1 entre lesdits moyens 3 de guidage et d'augmenter la surface de contact, ce qui avantageusement améliore l'efficacité des échanges de calories entre l'air extérieur et le fluide caloporteur circulant à l'intérieur des moyens 3 de guidage.

En l'espèce, les côtés longitudinaux des ailettes 5, 5', 5" ont une largeur h identique et des longueurs respectives L1, L2, L3 variables, de sorte qu'au moins une ailette 5, 5', 5" ait une partie dépassant par rapport à au moins un côté d'attaque 34 des moyens de guidage 3. Ainsi, les points de deux côtés transversaux de deux ailettes contigües 5, 5', 5" situés sur une même ligne rectiligne parallèle aux moyens 3 de guidage ne sont pas à la même distance du côté d'attaque.

La distance séparant le côté d'attaque 34 des points d'un côté transversal d'une ailette 5, 5', 5" situés sur cette ligne est différente de la distance séparant le côté d'attaque 34 des points du côté transversal d'une ailette 5, 5', 5" contigüe situés sur cette même ligne.

Cette différence de distance entre les extrémités de deux ailettes 5, 5', 5" contigües permet avantageusement d'augmenter le temps nécessaire pour que le givre bouche les interstices entre les ailettes 5, 5', 5" et d'éviter ainsi au flux d'air de circuler entre lesdites ailettes 5, 5', 5". En effet, le givre se forme par condensation aux extrémités des ailettes 5, 5', 5" et l'augmentation de la distance entre ces extrémités a pour conséquence qu'il faut une quantité plus importante de givre pour boucher les interstices et faire la jonction entre deux extrémités.

L'échangeur thermique 1 comporte ainsi, entre ses moyens 3 de guidage, une alternance d'ailettes plus longues et plus courtes.

Pour un résultat optimal, sans pour autant trop élargir l'échangeur thermique 1, la distance entre les extrémités de deux ailettes 5, 5', 5" adjacentes est comprise entre 1 et 5 mm et de préférence de l'ordre de 2mm.

Selon un premier mode de réalisation représenté à la figure 2A, l'échangeur thermique 1, peut comporter en alternance :
- au moins une première ailette 5 de longueur L1 supérieure à la largeur a d'un côté longitudinal 32 d'un moyen 3 de guidage, cette première ailette 5 est disposée partiellement entre au moins deux moyens 3 de guidage, cette première ailette 5 qui s'étend longitudinalement, dépasse par rapport à un côté longitudinal et latéral d'un moyen 3 de guidage, et plus particulièrement par rapport audit côté d'attaque 34 ;
- au moins une seconde ailette 5' de longueur L2 égale ou inférieure à la largeur a d'un côté longitudinal 32 d'un moyen 3 de guidage, cette seconde ailette 5' qui s'étend longitudinalement, est disposée totalement entre au moins deux moyens 3 de guidage de l'écoulement d'un fluide.

Selon un second mode de réalisation représenté à la figure 2B, l'échangeur thermique 1, peut comporter en alternance :
- au moins une première ailette 5 de longueur L1 supérieure à la largeur a d'un côté longitudinal 32 d'un moyen 3 de guidage, cette première ailette 5 est disposée partiellement entre au moins deux moyens 3 de guidage, cette première ailette 5 qui s'étend longitudinalement, dépasse par rapport à un côté longitudinal et latéral d'un moyen 3 de guidage, et plus particulièrement par rapport audit côté d'attaque 34 ;
- au moins une troisième ailette 5" de longueur L3 supérieure à la largeur a d'un côté longitudinal 32 d'un moyen 3 de guidage, cette troisième ailette 5" est disposée partiellement entre au moins deux moyens 3 de guidage, cette troisième ailette 5" qui s'étend longitudinalement, dépassant par rapport audit même côté longitudinal et latéral.

La longueur L1 de la première ailette 5 est supérieure à la longueur L3 de la troisième ailette 5", ces ailettes 5, 5" étant positionnées de telle façon que la partie de la première ailette 5 qui dépasse par rapport au côté longitudinal et latéral ait une longueur supérieure à celle de la partie de la troisième ailette 5" qui dépasse par rapport à ce même côté longitudinal et latéral.

Il est également possible d'imaginer un troisième mode réalisation (non représenté) combinant les deux premiers modes de réalisation. Ainsi l'échangeur thermique 1 peut également comporter :
- au moins une première ailette 5 de longueur L1 supérieure à la largeur a d'un côté longitudinal 32 d'un moyen 3 de guidage, cette première ailette 5 est disposée partiellement entre au moins deux moyens 3 de guidage, cette première ailette 5 qui s'étend longitudinalement, dépassant par rapport à un côté longitudinal et latéral d'un moyen 3 de guidage, et plus particulièrement par rapport audit côté d'attaque 34 ;
- au moins une seconde ailette 5' de longueur L2 égale ou inférieure à la largeur a d'un côté longitudinal 32 d'un moyen 3 de guidage, cette seconde ailette 5' qui s'étend longitudinalement, est disposée totalement entre au moins deux moyens 3 de guidage de l'écoulement d'un fluide.
- au moins une troisième ailette 5" de longueur L3 supérieure à la largeur a d'un côté longitudinal 32 d'un moyen 3 de guidage, cette troisième ailette 5" est disposée partiellement entre au moins deux moyens 3 de guidage, cette troisième ailette 5" qui s'étend longitudinalement, dépassant par rapport audit même côté longitudinal et latéral.

La longueur L1 de la première ailette 5 est supérieure à la longueur L3 de la troisième ailette 5", ces ailettes 5, 5" étant positionnées de telle façon que la partie de la première ailette 5 qui dépasse par rapport au côté longitudinal et latéral ait une longueur supérieure à celle de la partie de la troisième ailette 5" qui dépasse par rapport à ce même côté longitudinal et latéral.

Les ailettes 5 et 5" dépassant par rapport aux côtés longitudinaux et latéraux des moyens 3 de guidage, dépassent préférentiellement par rapport aux côtés d'attaque 34 situés sur le coté de l'échangeur thermique 1 faisant face au flux d'air extérieur car le givre a tendance à se former plus rapidement sur ce côté exposé. Il est néanmoins également possible que les ailettes 5 et 5" dépassent par rapport aux côtés de sortie situés à l'opposé des côtés d'attaque 34.

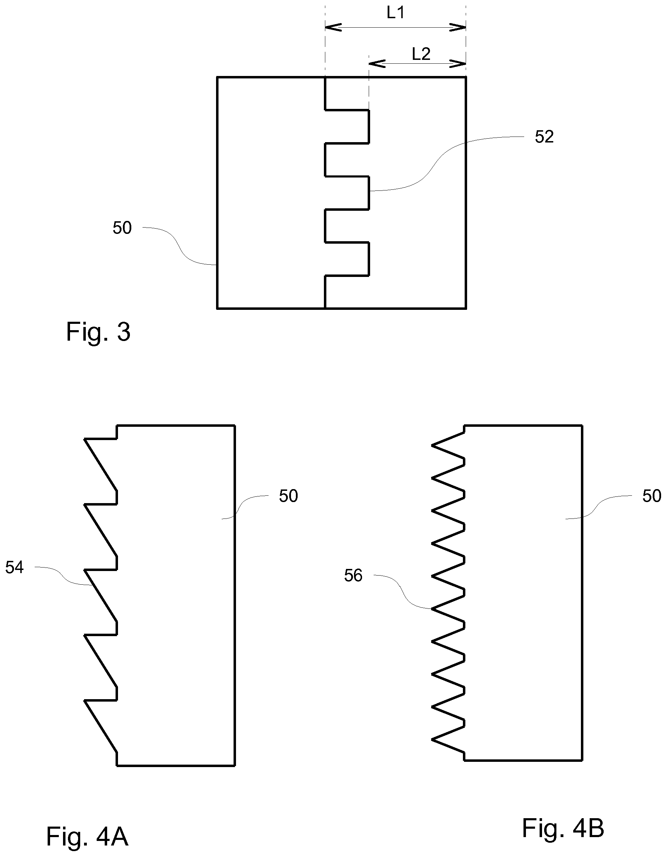

Tel que cela est représenté sur les figures 3, 4A et 4B, les ailettes 5, 5', 5" sont formées à partir d'une feuille métallique 50 pliée comportant sur au moins un de ses bords une succession de motifs dont les extrémités correspondent aux extrémités d'entrée et/ou de sortie des ailettes 5, 5', 5".

Selon un premier mode de réalisation du procédé de fabrication, lesdits motifs sont réalisés lors d'une étape de prédécoupage de ladite feuille métallique 50 réalisée avant une étape de pliage de ladite feuille métallique 50.

Tel que représenté sur la figure 3, afin de limiter les pertes de matière, les feuilles métalliques 50 peuvent être réalisées à partir d'une feuille métallique commune dont la prédécoupe permet d'obtenir plusieurs feuilles métalliques 50.

Selon un autre mode de réalisation du procédé de fabrication, lesdits motifs de la feuille métallique 50 sont réalisés lors de l'étape de pliage de ladite feuille métallique 50.

Tel que cela est représenté sur la figure 3, lesdits motifs sont des motifs crénelés 52 réalisés sur le bord de la feuille métallique 50 correspondant aux extrémités d'entrée et/ou de sortie des ailettes 5, 5', 5".

Ce motif crénelé 52 des feuilles métalliques 50 permet d'obtenir des ailettes 5, 5', 5" dont la longueur L1, L2 et L3 est constante sur toute leur hauteur h.

Tel que cela est représenté sur les figures 4A et 4B, lesdits motifs sont des motifs dentelés 54, 56 pouvant être des triangles rectangles tel que représenté sur la figure 4A ou des triangles isocèles tel que représenté sur la figure 4B.

Ces motifs dentelés 54, 56 des feuilles métalliques 50 permettent d'obtenir des ailettes 5, 5', 5" dont la longueur L1, L2 et L3 est variable sur leur hauteur h.

Ainsi, en raison de la différence de la distance entre les extrémités des différentes ailettes 5, 5', 5" et le côté d'attaque 34 et/ou de sortie, le givre met plus de temps à s'implanter et à boucher les espaces entre lesdites ailettes 5, 5', 5", la fréquence des dégivrages pouvant ainsi avantageusement être allongée.

## Revendications

1. Echangeur thermique (1) comportant :
- au moins deux ailettes (5, 5', 5") ;
- au moins deux moyens (3) permettant de guider l'écoulement d'un fluide qui sont disposés l'un par rapport à l'autre de telle manière que les ailettes (5, 5', 5") peuvent être disposées totalement ou partiellement entre lesdits au moins deux moyens (3) de guidage de l'écoulement d'un fluide, de façon à être aptes à permettre le guidage de l'écoulement d'un flux d'air circulant entre lesdits moyens (3) de guidage de l'écoulement d'un fluide,
chaque moyen (3) de guidage de l'écoulement d'un fluide comprend au moins un côté d'attaque (34), les côtés d'attaque (34) définissant avec deux ailettes (5, 5', 5") contigües l'entrée d'un canal de circulation dudit flux d'air,
**caractérisé en ce que** la distance séparant l'extrémité d'une ailette (5, 5', 5") d'un côté d'attaque (34) est distincte de la distance séparant l'extrémité d'une ailette (5, 5', 5") contigüe du même côté d'attaque (34).

2. Echangeur thermique (1) selon la revendication 1, **caractérisé en ce que** chaque moyen (3) de guidage de l'écoulement d'un fluide de l'échangeur thermique (1) comprend au moins un côté de sortie, les côtés de sortie définissant avec deux ailettes (5, 5', 5") contigües la sortie d'un canal de circulation dudit flux d'air, et la distance séparant l'extrémité de sortie d'une ailette (5, 5', 5") d'un côté de sortie est distincte de la distance séparant l'extrémité de sortie d'une ailette (5, 5', 5") contigüe du même côté de sortie.

3. Echangeur thermique (1) selon l'une des revendications 1 ou 2, **caractérisé en ce que** l'échangeur thermique (1) comporte en alternance :
- au moins une première ailette (5) disposée partiellement entre au moins deux moyens (3) de guidage de l'écoulement d'un fluide ;
- au moins une seconde ailette (5') disposée totalement entre au moins deux moyens (3) de guidage de l'écoulement d'un fluide.

4. Echangeur thermique (1) selon l'une des revendications 1 ou 2, **caractérisé en ce que** l'échangeur thermique (1) comporte en alternance :
- au moins une première ailette (5) disposée partiellement entre au moins deux moyens (3) de guidage de l'écoulement d'un fluide, une partie de cette première ailette (5) dépassant par rapport audit côté d'attaque(34) et/ou audit côté de sortie ;
- au moins une troisième ailette (5") disposée partiellement entre au moins deux moyens (3) de guidage de l'écoulement d'un fluide, une partie de cette troisième ailette (5") dépassant par rapport audit même côté d'attaque (34) et/ou audit même côté de sortie ;
la longueur de ladite partie de la première ailette (5) dépassant par rapport audit côté d'attaque (34) est supérieure à celle de ladite partie de la troisième ailette (5") dépassant par rapport audit même côté d'attaque (34) et/ou la longueur de ladite partie de la première ailette (5) dépassant par rapport audit côté de sortie est supérieure à celle de ladite partie de la troisième ailette (5") dépassant par rapport audit même côté de sortie.

5. Echangeur thermique (1) selon l'une des revendications 1 à 4, **caractérisé en ce que** l'échangeur thermique (1) comporte :
- au moins une première ailette (5) disposée partiellement entre au moins deux moyens (3) de guidage de l'écoulement d'un fluide, une partie de cette première ailette (5) dépassant par rapport audit côté d'attaque (34) et/ou audit côté de sortie ;
- au moins une seconde ailette (5') disposée totalement entre au moins deux moyens (3) de guidage de l'écoulement d'un fluide, l'intégralité de cette seconde ailette (5') étant disposée entre ces deux moyens (3) de guidage de l'écoulement d'un fluide ;
- au moins une troisième ailette (5") disposée partiellement entre au moins deux moyens (3) de guidage de l'écoulement d'un fluide, une partie de cette troisième ailette (5") dépassant par rapport audit même côté d'attaque (34) et/ou audit même côté de sortie ;
la longueur de ladite partie de la première ailette (5) dépassant par rapport audit côté d'attaque (34) est supérieure à celle de ladite partie de la troisième ailette (5") dépassant par rapport audit même côté d'attaque (34) et/ou la longueur de ladite partie de la première ailette (5) dépassant par rapport audit côté de sortie est supérieure à celle de ladite partie de la troisième ailette (5") dépassant par rapport audit même côté de sortie.

6. Echangeur thermique (1) selon l'une des revendications précédentes, **caractérisé en ce que** les moyens (3) permettant de guider l'écoulement d'un fluide s'étendent sensiblement parallèlement les uns par rapport aux autres.

7. Echangeur thermique (1) selon l'une des revendications précédentes, **caractérisé en ce que** les ailettes (5, 5', 5") s'étendent sensiblement parallèlement les unes par rapport aux autres.

8. Echangeur thermique (1) selon l'une des revendications précédentes, **caractérisé en ce que** les moyens (3) permettant de guider l'écoulement d'un fluide sont de forme sensiblement parallélépipédique.

9. Echangeur thermique (1) selon l'une des revendications précédentes, **caractérisé en ce que** les ailettes (5, 5', 5") sont de forme sensiblement parallélépipédique.

10. Echangeur thermique (1) selon l'une des revendications précédentes, **caractérisé en ce que** les ailettes (5, 5', 5") s'étendent sensiblement perpendiculairement aux moyens (3) permettant de guider l'écoulement d'un fluide.

11. Procédé de fabrication d'un échangeur thermique (1) comportant :
- au moins deux ailettes (5, 5', 5") ;
- au moins deux moyens (3) permettant de guider l'écoulement d'un fluide qui sont disposés l'un par rapport à l'autre de telle manière que les ailettes (5, 5', 5") peuvent être disposées totalement ou partiellement entre lesdits au moins deux moyens (3) de guidage de l'écoulement d'un fluide, de façon à être aptes à permettre le guidage de l'écoulement d'un flux d'air circulant entre lesdits moyens (3) de guidage de l'écoulement d'un fluide,
et chaque moyen (3) de guidage de l'écoulement d'un fluide comprend au moins un côté d'attaque (34), les côtés d'attaque (34) définissant avec deux ailettes (5, 5', 5") contigües l'entrée d'un canal de circulation dudit flux d'air,
et dont la distance séparant l'extrémité d'une ailette (5, 5', 5") d'un côté d'attaque (34) est distincte de la distance séparant l'extrémité d'une ailette (5, 5', 5") contigüe du même côté d'attaque (34),
ledit procédé comportant une étape de traitement d'une feuille métallique (50) consistant à réaliser une succession de motifs dont les extrémités correspondent aux extrémités d'entrée et/ou de sortie des ailettes (5, 5', 5").

## Patentansprüche

1. Wärmetauscher (1), der aufweist:
- mindestens zwei Lamellen (5, 5', 5");
- mindestens zwei das Leiten des Strömung eines Fluids erlaubende Einrichtungen (3), die so zueinander angeordnet sind, dass die Lamellen (5, 5', 5") ganz oder teilweise zwischen den mindestens zwei Leiteinrichtungen (3) der Strömung eines Fluids angeordnet sein können, um das Leiten der Strömung eines Luftstroms zu erlauben, der zwischen den Leiteinrichtungen (3) der Strömung eines Fluids zirkuliert,
wobei jede Leiteinrichtung (3) der Strömung eines Fluids mindestens eine Vorderseite (34) enthält, wobei die Vorderseiten (34) mit zwei angrenzenden Lamellen (5, 5', 5") den Eingang eines Zirkulationskanals des Luftstroms definieren, **dadurch gekennzeichnet, dass** der das Ende einer Lamelle (5, 5', 5") von einer Vorderseite (34) trennende Abstand sich von dem Abstand unterscheidet, der das Ende einer angrenzenden Lamelle (5, 5', 5") von der gleichen Vorderseite (34) trennt.

2. Wärmetauscher (1) nach Anspruch 1, **dadurch gekennzeichnet, dass** jede Leiteinrichtung (3) der Strömung eines Fluids des Wärmetauschers (1) mindestens eine Ausgangsseite enthält, wobei die Ausgangsseiten mit zwei angrenzenden Lamellen (5, 5', 5") den Ausgang eines Zirkulationskanals des Luftstroms definieren, und der das Ausgangsende einer Lamelle (5, 5', 5") von einer Ausgangsseite trennende Abstand sich von dem Abstand unterscheidet, der das Ausgangsende einer angrenzenden Lamelle (5, 5', 5") von der gleichen Ausgangsseite trennt.

3. Wärmetauscher (1) nach einem der Ansprüche 1 oder 2, **dadurch gekennzeichnet, dass** der Wärmetauscher (1) abwechselnd aufweist:
- mindestens eine erste Lamelle (5), die teilweise zwischen mindestens zwei Leiteinrichtungen (3) der Strömung eines Fluids angeordnet ist;
- mindestens eine zweite Lamelle (5'), die ganz zwischen mindestens zwei Leiteinrichtungen (3) der Strömung eines Fluids angeordnet ist.

4. Wärmetauscher (1) nach einem der Ansprüche 1 oder 2, **dadurch gekennzeichnet, dass** der Wärmetauscher (1) abwechselnd aufweist:
- mindestens eine erste Lamelle (5), die teilweise zwischen mindestens zwei Leiteinrichtungen (3) der Strömung eines Fluids angeordnet ist, wobei ein Teil dieser ersten Lamelle (5) bezüglich der Vorderseite (34) und/oder der Ausgangsseite übersteht;
- mindestens eine dritte Lamelle (5"), die teilweise zwischen mindestens zwei Leiteinrichtungen (3) der Strömung eines Fluids angeordnet ist, wobei ein Teil dieser dritten Lamelle (5") bezüglich der gleichen Vorderseite (34) und/oder der gleichen Ausgangsseite übersteht;
wobei die Länge des Teils der ersten Lamelle (5), der bezüglich der Vorderseite (34) übersteht, größer ist als diejenige des Teils der dritten Lamelle (5"), die bezüglich der gleichen Vorderseite (34) übersteht, und/oder die Länge des Teils der ersten Lamelle (5), die bezüglich der Ausgangsseite übersteht, größer ist als diejenige des Teils der dritten Lamelle (5"), die bezüglich der gleichen Ausgangsseite übersteht.

5. Wärmetauscher (1) nach einem der Ansprüche 1 bis 4, **dadurch gekennzeichnet, dass** der Wärmetauscher (1) aufweist:
- mindestens eine erste Lamelle (5), die teilweise zwischen mindestens zwei Leiteinrichtungen (3) der Strömung eines Fluids angeordnet ist, wobei ein Teil dieser ersten Lamelle (5) bezüglich der Vorderseite (34) und/oder der Ausgangsseite übersteht;
- mindestens eine zweite Lamelle (5'), die ganz zwischen mindestens zwei Leiteinrichtungen (3) der Strömung eines Fluids angeordnet ist, wobei die Gesamtheit dieser zweiten Lamelle (5') zwischen diesen zwei Leiteinrichtungen (3) der Strömung eines Fluids angeordnet ist;
- mindestens eine dritte Lamelle (5"), die teilweise zwischen mindestens zwei Leiteinrichtungen (3) der Strömung eines Fluids angeordnet ist, wobei ein Teil dieser dritten Lamelle (5") bezüglich der gleichen Vorderseite (34) und/oder der gleichen Ausgangsseite übersteht;
wobei die Länge des Teils der ersten Lamelle (5), der bezüglich der Vorderseite (34) übersteht, größer ist als diejenige des Teils der dritten Lamelle (5"), der bezüglich der gleichen Vorderseite (34) übersteht, und/oder die Länge des Teils der ersten Lamelle (5), der bezüglich der Ausgangsseite übersteht, größer ist als diejenige des Teils der dritten Lamelle (5"), der bezüglich der gleichen Ausgangsseite übersteht.

6. Wärmetauscher (1) nach einem der vorhergehenden Ansprüche, **dadurch gekennzeichnet, dass** die Einrichtungen (3), die es ermöglichen, die Strömung eines Fluids zu leiten, sich im Wesentlichen parallel zueinander erstrecken.

7. Wärmetauscher (1) nach einem der vorhergehenden Ansprüche, **dadurch gekennzeichnet, dass** die Lamellen (5, 5', 5") sich im Wesentlichen parallel zueinander erstrecken.

8. Wärmetauscher (1) nach einem der vorhergehenden Ansprüche, **dadurch gekennzeichnet, dass** die Einrichtungen (3), die es ermöglichen, die Strömung eines Fluids zu leiten, eine im Wesentlichen parallelepipedische Form haben.

9. Wärmetauscher (1) nach einem der vorhergehenden Ansprüche, **dadurch gekennzeichnet, dass** die Lamellen (5, 5', 5") eine im Wesentlichen parallelepipedische Form haben.

10. Wärmetauscher (1) nach einem der vorhergehenden Ansprüche, **dadurch gekennzeichnet, dass** die Lamellen (5, 5', 5") sich im Wesentlichen lotrecht zu den Einrichtungen (3) erstrecken, die es erlauben, die Strömung eines Fluids zu leiten.

11. Verfahren zur Herstellung eines Wärmetauschers (1), der aufweist:
- mindestens zwei Lamellen (5, 5', 5");
- mindestens zwei Einrichtungen (3), die es erlauben, die Strömung eines Fluids zu leiten, die so zueinander angeordnet sind, dass die Lamellen (5, 5', 5") ganz oder teilweise zwischen den mindestens zwei Leiteinrichtungen (3) der Strömung eines Fluids angeordnet sein können, um fähig zu sein, das Leiten der Strömung eines Luftstroms zu erlauben, der zwischen den Leiteinrichtungen (3) der Strömung eines Fluids zirkuliert,
und jede Leiteinrichtung (3) der Strömung eines Fluids mindestens eine Vorderseite (34) enthält,
wobei die Vorderseiten (34) mit zwei angrenzenden Lamellen (5, 5', 5") den Eingang eines Zirkulationskanals des Luftstroms definieren,
und wobei der das Ende einer Lamelle (5, 5', 5") von einer Vorderseite (34) trennende Abstand sich von dem Abstand unterscheidet, der das Ende einer angrenzenden Lamelle (5, 5', 5") von der gleichen Vorderseite (34) trennt,
wobei das Verfahren einen Schritt der Verarbeitung einer Metallfolie (50) aufweist, der darin besteht, eine Folge von Mustern herzustellen, deren Enden den Eingangs- und/oder Ausgangsenden der Lamellen (5, 5', 5") entsprechen.

## Claims

1. Heat exchanger (1) comprising:
- at least two fins (5, 5', 5");
- at least two means (3) making it possible to guide the flow of a fluid which are arranged with respect to one another such that the fins (5, 5', 5") can be arranged totally or partially between said at least two means (3) for guiding the flow of a fluid, so as to be able to allow guiding of the flow of an air stream circulating between said means (3) for guiding the flow of a fluid,
each means (3) for guiding the flow of a fluid comprises at least one leading edge (34), the leading edges (34) defining with two adjacent fins (5, 5', 5") the inlet of a duct for the circulation of said air stream,
**characterized in that** the distance separating the end of a fin (5, 5', 5") from a leading edge (34) is different from the distance separating the end of an adjacent fin (5, 5', 5") from the same leading edge (34) .

2. Heat exchanger (1) according to Claim 1, **characterized in that** each means (3) for guiding the flow of a fluid of the heat exchanger (1) comprises at least one outlet side, the outlet sides defining with two adjacent fins (5, 5', 5") the outlet of a duct for the circulation of said air stream, and the distance separating the outlet end of a fin (5, 5', 5") from an outlet end is different from the distance separating the outlet end of an adjacent fin (5, 5', 5") from the same outlet side.

3. Heat exchanger (1) according to either of Claims 1 and 2, **characterized in that** the heat exchanger (1) comprises in alternating fashion:
- at least one first fin (5) arranged partially between at least two means (3) for guiding the flow of a fluid;
- at least one second fin (5') arranged totally between at least two means (3) for guiding the flow of a fluid.

4. Heat exchanger (1) according to either of Claims 1 and 2, **characterized in that** the heat exchanger (1) comprises in alternating fashion:
- at least one first fin (5) arranged partially between at least two means (3) for guiding the flow of a fluid, a part of this first fin (5) protruding with respect to said leading edge (34) and/or said outlet side;
- at least one third fin (5") arranged partially between at least two means (3) for guiding the flow of a fluid, a part of this third fin (5") protruding with respect to said same leading edge (34) and/or said same outlet side;
the length of said part of the first fin (5) protruding with respect to said leading edge (34) is greater than that of said part of the third fin (5") protruding with respect to said same leading edge (34) and/or the length of said part of the first fin (5) protruding with respect to said outlet side is greater than that of said part of the third fin (5") protruding with respect to said same outlet side.

5. Heat exchanger (1) according to one of Claims 1 to 4, **characterized in that** the heat exchanger (1) comprises:
- at least one first fin (5) arranged partially between at least two means (3) for guiding the flow of a fluid, a part of this first fin (5) protruding with respect to said leading edge (34) and/or said outlet side;
- at least one second fin (5') arranged totally between at least two means (3) for guiding the flow of a fluid, the whole of this second fin (5') being arranged between these two means (3) for guiding the flow of a fluid;
- at least one third fin (5") arranged partially between at least two means (3) for guiding the flow of a fluid, a part of this third fin (5") protruding with respect to said same leading edge (34) and/or said same outlet side;
the length of said part of the first fin (5) protruding with respect to said leading edge (34) is greater than that of said part of the third fin (5") protruding with respect to said same leading edge (34) and/or the length of said part of the first fin (5) protruding with respect to said outlet side is greater than that of said part of the third fin (5") protruding with respect to said same outlet side.

6. Heat exchanger (1) according to one of the preceding claims, **characterized in that** the means (3) making it possible to guide the flow of a fluid extend substantially parallel to one another.

7. Heat exchanger (1) according to one of the preceding claims, **characterized in that** the fins (5, 5', 5") extend substantially parallel to one another.

8. Heat exchanger (1) according to one of the preceding claims, **characterized in that** the means (3) making it possible to guide the flow of a fluid are of substantially parallelepipedal shape.

9. Heat exchanger (1) according to one of the preceding claims, **characterized in that** the fins (5, 5', 5") are of substantially parallelepipedal shape.

10. Heat exchanger (1) according to one of the preceding claims, **characterized in that** the fins (5, 5', 5") extend substantially perpendicularly to the means (3) making it possible to guide the flow of a fluid.

11. Method for manufacturing a heat exchanger (1) comprising:
- at least two fins (5, 5', 5");
- at least two means (3) making it possible to guide the flow of a fluid which are arranged with respect to one another such that the fins (5, 5', 5") can be arranged totally or partially between said at least two means (3) for guiding the flow of a fluid, so as to be able to allow guiding of the flow of an air stream circulating between said means (3) for guiding the flow of a fluid,
and each means (3) for guiding the flow of a fluid comprises at least one leading edge (34), the leading edges (34) defining with two adjacent fins (5, 5', 5") the inlet of a duct for the circulation of said air stream,
and in which the distance separating the end of a fin (5, 5', 5") from a leading edge (34) is different from the distance separating the end of an adjacent fin (5, 5', 5") from the same leading edge (34),
said method comprising a step of processing a metal sheet (50) consisting in producing a succession of patterns whose ends correspond to the inlet and/or outlet ends of the fins (5, 5', 5") .
